# EUROPEAN PATENT APPLICATION

(11) **EP 4 807 639 A1**
(43) Date of publication of application: **16.09.2026**
(21) Application number: 26164382.9
(22) Date of filing: 12.03.2026
(51) Int. Cl.: G06Q 10/04, G06Q 10/087, G06Q 50/04

(54) **A COMPUTER-IMPLEMENTED METHOD OF OPTIMIZING A REINFORCEMENT STEEL (REBAR) CUTTING PROCESS**

(30) Priority: 12.03.2025 GB 202503628
(71) Applicant: Nightingale HQ Limited, Caerphilly Wales CF83 3GG (GB)
(72) Inventor: KEARNEY, Ruth, Caerphilly, Wales CF83 3GG (GB)
(74) Representative: O'Connor, Michael Donal

(57) **Abstract**

This invention relates to a computer-implemented method of optimizing a reinforcement steel (rebar) cutting process. The method comprising the steps of creating and maintaining an inventory of rebar stock, receiving a plurality of disparate orders for cut lengths of rebar, performing an optimization process on the orders comprising the steps of: determining the plurality of possible cutting patterns applicable to satisfy the orders, and determining the optimal cutting pattern from the plurality of possible cutting patterns. The optimal cutting pattern factors in both the minimum amount of waste; and the minimum amount of carbon (CEQ) in the waste. In this way, the amount of waste, and in particular the amount of carbon waste, is significantly reduced.

## Description

### Introduction

This invention relates to a computer implemented method for optimizing a reinforcement / reinforcing steel (rebar) cutting process.

Rebar is commonly used in the building industry to strengthen concrete and masonry structures under tension. Generally speaking, rebar is manufactured in long strips, often of the order of 10 metres (10m) in length, in a variety of different diameters (from approximately 6mm (0.006m) up to approximately 50mm (0.05m)). When undertaking a construction project, it is relatively common for the construction engineers to specify different lengths of rebar required for the project, many, if not all of which will be non-standard lengths. The rebar of a desired diameter is then cut from the long strips of rebar into the desired lengths off-site before being delivered to site in the required lengths.

A problem with the known methods is that there is a significant amount of waste (scrap), as well as a significant amount of offcuts produced. For example, for one particular operator, for bar diameters of 20mm, 25mm, 32mm and 40mm, those lengths of rebar remaining after the cutting process that are less than 150cm (1.5m) in length are generally discarded for scrap. For bar diameters of 16mm and 12mm, those lengths of rebar remaining after the cutting process that are less than 100cm (1m) in length are generally discarded for scrap. Anything above those lengths is typically classified as an "offcut". The scrap must be stored and then transported off-site, often at a cost, or at a negligible profit. The scrap may be recycled over time into other steel products however there is a significant carbon footprint associated with the scrap and its subsequent handling. The offcuts are stored for subsequent sale (if the size exactly matches a future order) or subsequent cutting down to size to match a future order, potentially resulting in some scrap from the offcut. The offcuts take up storage space, and require careful inventory management to make them available and accessible for subsequent use. Generally speaking, the known methods of cutting rebar and fulfilling customer orders are time consuming, space consuming, and require significant overhead in the management of inventory to optimize production and use of materials. This leads to a very inefficient production method generally.

It is an object of the present invention to provide a computer implemented method for optimizing a reinforcement steel (rebar) cutting process that addresses at least one of the above-identified problems with the know methods. It is a further object of the present invention to provide a useful alternative choice for the customer.

### Statements of Invention

According to the invention there is provided a computer-implemented method of optimizing a reinforcement steel (rebar) cutting process, the method comprising the steps of:
creating and maintaining an inventory of rebar stock, the inventory comprising, for each piece of rebar, the diameter of the rebar, the length of the rebar, and the carbon equivalent value (CEQ) of the rebar;
receiving a plurality of disparate orders for cut lengths of rebar;
collating the plurality of orders into a unitary order specification;
performing an optimization process on the unitary order specification, the optimization process comprising the steps of:
   determining the plurality of possible cutting patterns applicable to satisfy the order;
   determining the optimal cutting pattern from the plurality of possible cutting patterns applicable to satisfy the order, the optimal cutting pattern factoring in both (i) the minimum amount of waste; and (ii) the minimum amount of carbon (CEQ) in the waste; and thereafter providing the optimal cutting pattern to a rebar cutting process for execution.

By having such a method, a far more efficient method will be provided, thereby minimizing waste, offcuts and reducing the carbon cost of the manufacturing process. A plurality of orders from customers are batched together and the optimization is performed on the plurality of orders. This will provide a more optimal solution and better use of the inventory. For example, rather than producing one or more offcuts, the combined orders may result in the full length of the rebar being used across the multiple orders. Furthermore, if it is not possible to use the entire bar without any offcut or scrap being produced, the method will further endeavour to use as much of the bar as possible, leaving the smallest possible offcut, without creating scrap. Perhaps most importantly, the amount of carbon in the scrap and the offcuts is taken into account in the optimisation process in order to reduce the carbon cost of the process. In this way, the carbon cost can be significantly reduced compared to the existing offerings.

The present invention provides a method of optimizing a reinforcement steel (Rebar) cutting process by balancing the least waste with associated carbon emissions, using combinatorial optimization and applied mathematics. This invention may be referred to as Carbon Aware Knapsack Solver (CAKS). The invention solves a knapsack problem (KP) using Heuristics or Linear Programming (LP) as the mathematical basis to optimize the rebar cutting process. The optimization algorithm identifies the optimal combination of supplied orders and requested cuts that reduces scrap and minimizes offcuts

In one embodiment of the invention, there is provided a computer implemented method in which the step of performing an optimization process on the unitary order specification, comprises the alternative steps of:
determining a solution space containing the plurality of possible cutting pattern solutions applicable to satisfy the order;
providing a set of heuristic rules which prioritise pathways which satisfy the logistical and operational business requirements appropriate to a given client;
determining the optimal cutting pattern from the solution space of possible cutting patterns applicable to satisfy the order, the optimal cutting pattern factoring in both (i) the minimum amount of waste; and (ii) the minimum amount of carbon (CEQ) in the waste; and (iii) the business preference for off-cut lengths and frequency.

In this way, the heuristic approach gathers a cloud of potential solutions and follows rules that are provided to search for a good result from the set. The method can iteratively perform this operation and should improve the quality of results after each iteration. It is then possible to tune the number of iterations necessary to get a "good enough" result without wasting further computational power, and thus energy, on obtaining a further marginal gain. Through this approach, it will be understood that the "optimal" solution is not "optimal" in a mathematical sense, but rather that the "optimal solution" can be said to be, with a fair degree of certainty, at least "near-optimal".

In one embodiment of the invention there is provided a computer-implemented method in which for those rebar with no waste generated by the cutting process after applying the cutting pattern, the rebar with the highest CEQ value is selected from inventory. This is seen as a particularly advantageous aspect of the present invention. By using the rebar with the highest CEQ value in this way, the rebar with the highest CEQ will be used in the fulfillment of (at least part of) the order. As there is no offcut, carbon costs are minimised as no further carbon costs beyond those in the initial manufacturing process prior to cutting of the bar are incurred.

In one embodiment of the invention there is provided a computer-implemented method in which, for rebar with waste generated by the cutting process after applying the cutting pattern, the rebar with the lowest available CEQ value is selected from inventory. In this way, when there is waste created, the waste will be rebar with the lowest carbon content. In this way, the carbon costs are further minimised.

In one embodiment of the invention there is provided a computer-implemented method in which the method comprises the initial step of receiving user-specified constraints for the optimization process. User specified constraints may be provided by a non-technical operator, and will provide the boundaries in which the optimization process may operate.

In one embodiment of the invention there is provided a computer-implemented method in which the user-specified constraints include a user specified rebar length. In this way, the operator can specify the length of the rebar being used for cutting and supplying the orders. This may vary depending on the diameter of the rebar, the provider of the rebar, and whether or not the rebar is being provided from a supply of offcuts.

In one embodiment of the invention there is provided a computer-implemented method in which the user-specified constraints include a set of order requirements including the cut length and number required.

In one embodiment of the invention there is provided a computer-implemented method in which the user-specified constraints include a maximum number of cuts in a pattern. The maximum number of cuts, is, in part at least, due to computational constraints. The more cuts, the slower the process. If too many cuts are allowed, this may become too computationally expensive. This maximum value controls the computational complexity of the operation by reducing the size of the solution cloud in which a search must be performed. It allows the operator to balance the likelihood of finding a perfect solution with the operational cost of running a High-Performance Compute for longer periods of time, and thus increasing carbon added to the process by performing the optimisation computation. The operator can, over time, tune this maximum cuts value as the platform operates using real-world data to ensure it provides the best default balance known at that time. Accordingly, by providing a user specified constraint including the maximum number of cuts in a pattern, a more effective method may be provided.

In one embodiment of the invention there is provided a computer-implemented method in which the user-specified constraints include a length of the bar to be cut to minimize offcut.

In one embodiment of the invention there is provided a computer-implemented method in which the method comprises the initial step of receiving user-defined parameters.

In one embodiment of the invention there is provided a computer-implemented method in which the inventory is grouped according to the user-defined parameters. This will enable retrieval of the inventory in a more efficient manner, thereby speeding up the production process.

In one embodiment of the invention there is provided a computer-implemented method in which the step of performing an optimization process on the unitary order specification comprises performing combinatorial optimization on the unitary order specification. This is seen as a very simple and effective way of performing the optimization process on the unitary order specification.

In one embodiment of the invention there is provided a computer-implemented method in which the step of performing an optimization process on the unitary order specification comprises characterizing the optimization process as a knapsack problem. Again, this is seen as a very simple and efficient way of characterizing the optimization process that will facilitate a fast resolution to the optimization process.

In one embodiment of the invention there is provided a computer-implemented method in which the step of performing an optimization process on the unitary order specification comprises implementing a linear programming optimization solver. This is seen as a very simple and effective way of performing the optimization process on the unitary order specification.

In one embodiment of the invention there is provided a computer-implemented method in which the step of performing an optimization process on the unitary order specification comprises implementing a heuristics approach to the optimization process. A heuristic approach is a simple and effective alternative way of solving the optimization process. The approach may use one or more of heuristics, meta-heuristics, and hyper-heuristics.

In one embodiment of the invention there is provided a computer-implemented method in which the method includes the step of updating an inventory database. As inventory is used in the process and plurality of possible cutting patterns applicable to satisfy the order are calculated, the inventory may be updated to ensure that the inventory information is up to date and accurate.

In one embodiment of the invention there is provided a computer-implemented method in which the method includes the steps of (i) obtaining global energy production information; and (ii) sending the unitary order specification to a data processing centre based on one or more of: (a) the least amount of energy used; (b) the lowest cost of energy used; and (c) the lowest carbon required for processing. It is envisaged that the processing power required for the optimization algorithm may be substantial. Accordingly, it is envisaged that it may be carried out off site in remote server farms. The cost, and electricity usage of these farms, including the carbon footprint of the processing in those farms depending on how they are powered, may vary significantly. In this way, the most cost effective, and/or environmentally friendly manner for carrying out the invention may be determined.

In one embodiment of the invention there is provided a computer-implemented method in which the method includes the additional steps of: determining a carbon production value for the rebar depending on its point of origin; and factoring in the carbon production value when determining the CEQ of the rebar. The production method, electric or blast, will have a significant impact on the CEQ of the rebar and this may be taken into account in the method.

In one embodiment of the invention there is provided a computer-implemented method in which the method includes the additional steps of: determining a carbon transport value for the rebar depending on its point of origin; and factoring in the carbon transport value when determining the CEQ of the rebar. In this way, the origin of the rebar may also have a significant impact on the carbon footprint of the process. For example, rebar that has been shipped in from overseas may have a greater carbon footprint than rebar sourced locally. Indeed, rebar shipped in from different locations abroad may, or transported nationally or via road haulage, may have significantly different carbon footprints. In this way, the carbon footprint of the rebar in the transport to the manufacturing facility may be taken into account in the overall assessment of the optimization process.

### Detailed Description of the Invention

The invention will now be more clearly understood from the following description of some embodiments thereof given by way of example only with reference to the accompanying drawings, in which:-
Figure 1 is a diagrammatic representation of an example of optimization of a cutting pattern;
Figure 2 is a diagrammatic representation of further examples of optimization of cutting patterns;
Figure 3 is a flow diagram of the method according to the invention;
Figure 4 is a flow diagram of the optimization process;
Figure 5 is a flow diagram of the optimization algorithm process;
Figure 6 is a flow diagram of the energy provider analysis; and
Figure 7 is a flow diagram of the mill cert data process.

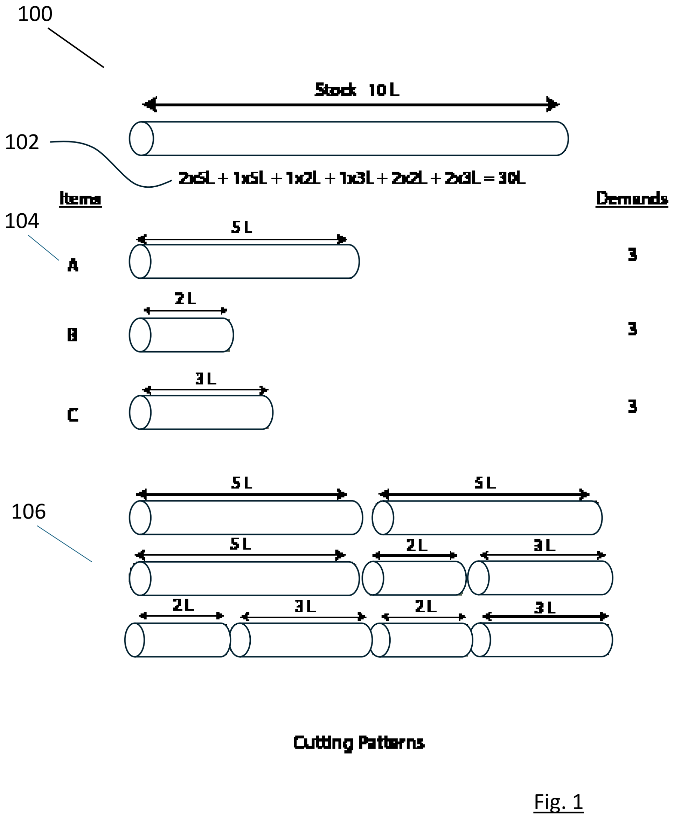

Referring to Figure 1, there is shown a diagrammatic representation of an example of optimization of a cutting pattern, indicated generally by the reference numeral 100. The stock comprises multiple units of rebar, each of length 10L (L is an arbitrary unit for the purposes of this example but may, for example, be a metre. So 10L is 10metres, 5L is 5 metres, 2L is two metres and so on. For the purposes of the example, the units of rebar and the orders will all have/specify the same diameter, however this is not intended to be limiting and is for ease of illustration.) In the present example, six individual orders, indicated by the reference numeral 102, are received. The first order is for two rebar each of length 5L. The second order is for one rebar of length 5L. The third order is for one rebar of length 2L. The fourth order is for one rebar of length 3L. The fifth order is for two rebar of length 2L and the sixth order is for two rebar of length 3L. It will be understood that instead of six individual orders, the orders may have come in in one order, or more or less than six orders.

The orders are collated together in a unitary order specification 104 and there are 3 orders for rebar of length 5L, three orders for rebar of length 2L, and three orders for rebar of length 3L. Instead of taking out 9 pieces of rebar of length 10L (one for each piece ordered) or 6 pieces of rebar (one for each order), an optimization algorithm is performed on the unitary order specification and it is determined that the order can be fulfilled using three lengths of 10L rebar from inventory. The cutting pattern of the three lengths of rebar is shown at 106, namely the first length of rebar is cut into two lengths of 5L each, the second length of rebar is cut into three pieces, 1x 5L, 1x 2L and 1x 3L, and the third length of rebar is cut into four pieces, 2x 2L and 2x 3L.

It will be understood that only three lengths of 10L rebar are used to complete the order and that there is no waste. It will be further understood that instead of three different cutting patterns being applied to each of the three lengths of 10L rebar, each of the cutting patterns could be the same for each length of 10L rebar. For example, each piece of 10L rebar could be cut into three pieces, 1x 5L, 1x 2L and 1x 3L to satisfy the orders. However it may be more efficient, all other things being equal, to progress through the longer cuts of length 5L first. The determined pattern may take into account lead time, scheduling, logistics or warehouse requirements.

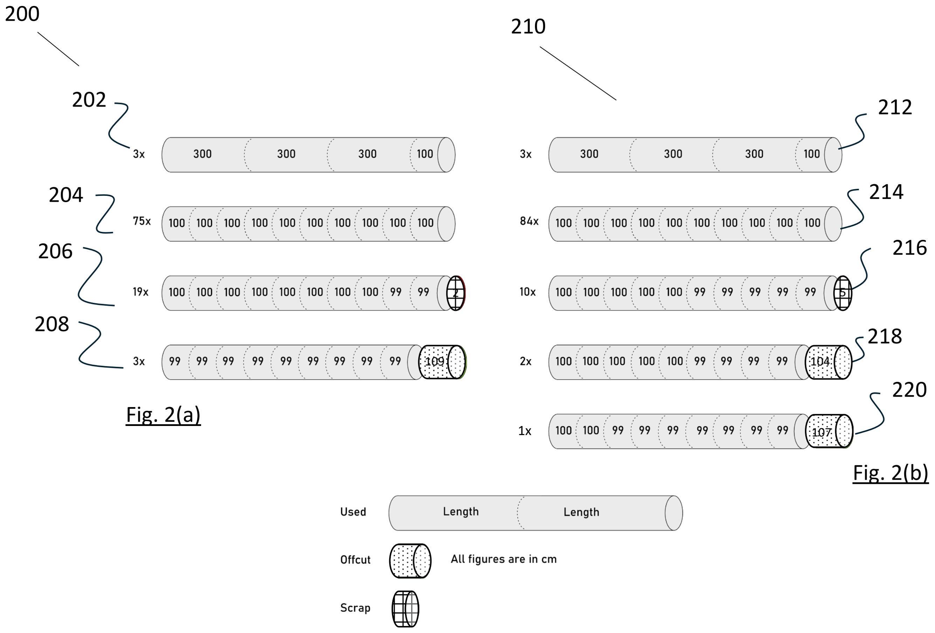

Referring now to Figures 2(a) and 2(b), there is shown a more complex example of optimization of cutting patterns, indicated generally by the reference numerals 200 and 210 respectively. Each length of rebar is 1000cm (10metres) long, and they are cut into pieces to satisfy the orders. All of the rebar pieces are being cut from rebar of length of 1000cm.

Referring first of all to the cutting pattern 200, there are three rebars (only one of which 202 is shown), each of length 1000cm, each of which is cut into four pieces, three of which are 300cm long, and one of which is 100cm long. There are a further 75 rebars (only one of which 204 is shown), of length 1000cm, each of which is cut into 10 equal lengths of 100cm each (i.e. 750 lengths of 100cm long rebar). There are a further 19 lengths (only one of which 206 is shown) of 1000cm long rebar each of which is cut into eight portions of 100cm each and two portions of 99cm each, with waste of 2cm at the end not used. (i.e. 152 lengths of 100cm long rebar, 38 lengths of 99cm long rebar, and 19 lengths of 2cm rebar waste). Finally, there are three lengths of 1000cm long rebar (only one of which 208 is shown) each of which is cut into nine portions of 99cm each, and one cut-off portion of 109cm (i.e. 27 lengths of 99cm long rebar, and 3 lengths of 109cm rebar cut off).

Referring now to the cutting pattern 210, there is shown an alternative cutting pattern considered by the optimization algorithm. Again, there are three rebars (only one of which 212 is shown), each of length 1000cm, each of which is cut into four pieces, three of which are 300cm long, and one of which is 100cm long, with no waste or cut-off. In this example, there are a further 84 rebars (only one of which 214 is shown), each of length 1000cm, each of which is cut into 10 equal lengths of 100cm each (i.e. 840 lengths of 100cm long rebar). In this example, there are a further 10 lengths (only one of which 216 is shown) of 1000cm long rebar, each of which is cut into five portions of 100cm each, five portions of 99cm each, and with waste of 5cm at the end not used. (i.e. 50 lengths of 100cm long rebar, 50 lengths of 99cm long rebar, and 10 lengths of 5cm rebar waste). In addition, there are a further 2 lengths (only one of which 218 is shown) of 1000cm long rebar, each of which is cut into five portions of 100cm each, four portions of 99cm each, with waste of 104cm at the end not used. (i.e. 10 lengths of 100cm long rebar, 8 lengths of 99cm long rebar, and 2 lengths of 104cm rebar offcut). Finally, there is one length of 1000cm long rebar 220 cut into two portions of 100cm each, seven portions of 99cm each, and one cut-off portion of 107cm (i.e. 2 lengths 100cm, 7 lengths of 99cm long rebar, and 1 length of 107cm rebar cut off).

Again, in the above examples, the lengths of rebar all are described as having the same diameter. This is for simplicity in illustrating the operation of the invention. However, it will be understood from the above and the following how orders (or those parts of orders) specifying different diameters of rebar, as well as lengths of rebar, could be collated together in accordance with the present invention in order to satisfy the orders and reduce waste.

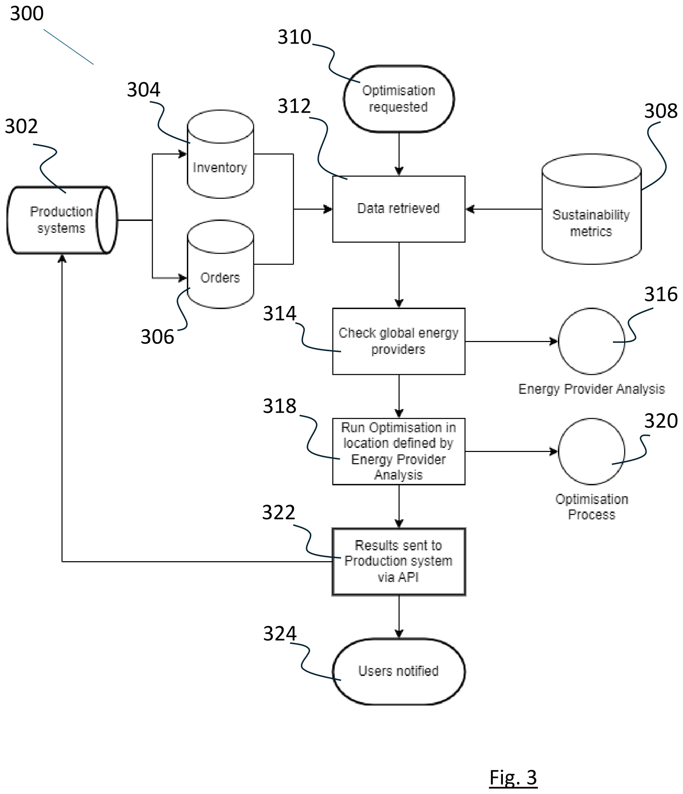

Referring now to Figure 3, there is shown a flow diagram of the method (and some system components) according to the invention, indicated generally by the reference numeral 300. The system components comprise production systems 302, inventory database 304, orders database 306 and sustainability metrics database 308. In Step 310, an optimisation is requested.

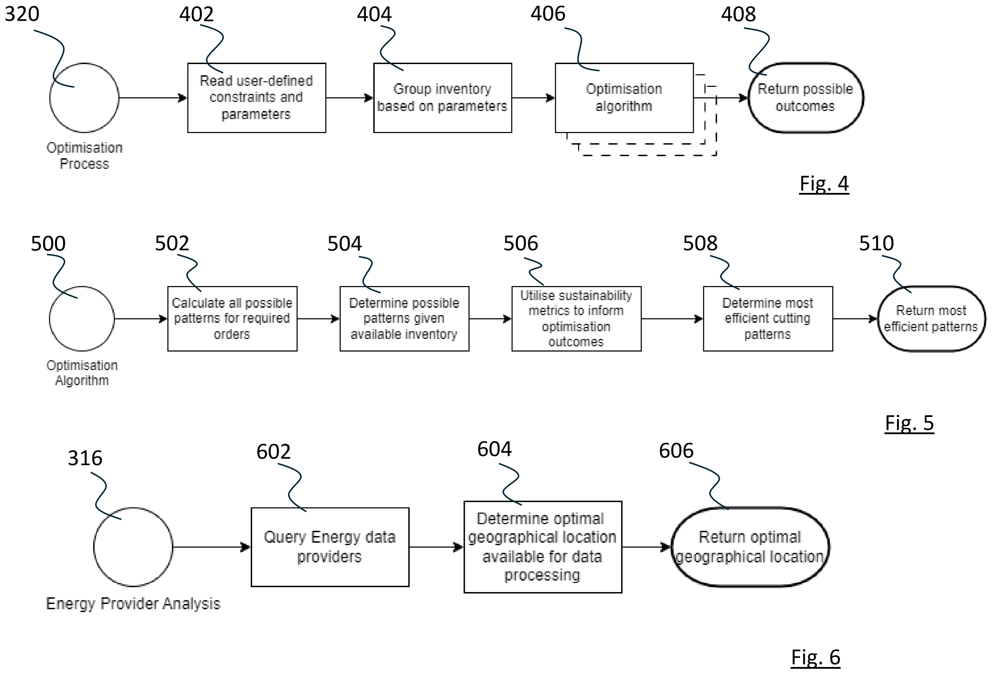

In step 312, data is retrieved from the production systems 302, inventory database 304, orders database 306 and sustainability metrics database 308. In step 314, a check of the global energy providers is undertaken to determine where the optimisation should be carried out. There is a branch 316 of energy provider analysis. This is expanded upon in more detail with respect to Figure 6 below. In step 318, the optimisation is run in the chosen location determined in the energy provider analysis. There is a branch 320 of the optimisation process. This will be expanded upon in more detail with respect to Figures 4 and 5 below. Once the optimisation has been run, the results of the optimisation are sent to the production systems 302 in step 322 and finally in step 324, the user is notified.

Referring to Figure 4, there is shown a flow diagram of the optimization process 320. The optimisation process 320 includes a first step 402 of reading in user-defined constraints and parameters. The constraints may include, for example, one or more of: (i) the order requirements (cut length and the number of cuts required); (ii) the maximum number of bar cuts that can be generated in a pattern; (iii) the maximum length of the bar to be cut, in order to minimize offcut; (iv) the length of the bars to be used when the calculated patterns are applied; and (v) the quantity and lengths of individual orders. The parameters may include the available stock, the characteristic of the available stock (e.g. high CEQ, low CEQ), the throughput of the available machinery and the like.

The optimization process includes a second step 404 of grouping the inventory according to the parameters, and a third step of providing the constraints, orders and parameters to the optimization algorithm 406. In step 408, the optimization process 320 returns the possible outcomes.

Referring now to Figure 5, there is shown a flow diagram of the optimization algorithm 406 step from Figure 4. The optimization algorithm 406 comprises the steps of calculate all possible patterns for the required orders in step 502. Determining the possible patterns given the available inventory in step 504. Utilizing the sustainability metrics to inform the optimization outcomes in step 506, and determine the most efficient cutting patterns based on the foregoing analysis in step 508. In step 510, the most efficient pattern is returned to the user for execution.

For the optimization problem, the present invention uses Linear Programming (LP) as the mathematical basis to optimize the rebar cutting process. Linear Programming, also sometimes called linear optimization, involves maximizing or minimising a linear objective function, subject to a set of linear inequality or equality constraints. The following constraints are set by the user: (1) the length of the bars to be used when the calculated patterns are applied; and (2) the quantity and lengths of individual orders. For the rebar optimization problem, the invention uses Python (registered trade mark, ^{®}) and the PuLP linear programming package to solve the linear programming problems. For a set of customer orders, of varying lengths, the invention would iterate the optimization globally over the full set of orders, finding the optimum set of cutting patterns that results in a solution that minimizes the amount of bar wastage. As alternatives to the linear programming approach, it is envisaged that one or more of dynamic programming, heuristics, meta-heuristics and/or hyper-heuristics could be used to good effect.

To solve it mathematically, several steps are performed: For the supplied order lengths/occurrences/diameters, the method according to the invention calculates the number of feasible cutting patterns available. A linear equation is used as an objective function, where it is desired to minimize the amount of wastage based upon the sum of cut lengths. For the linear equation, a constraint with an upper limit of the cutting pattern is equal to the length of the bar being used. An additional constraint is that the optimization output must match exactly the lengths requested, the total weight and lengths from the orders themselves: no additional cuts can be added or removed to provide an optimized response: the output must match the requested order configurations. PuLP solves for an optimum solution, applying various algorithms (e.g. Knapsack) if and where appropriate. It is envisaged that other algorithms such as, but not limited to: Probing, Gomory, Clique, MixedIntegerRounding2, Flowcover, TwoMirCuts and ZeroHalf could be used to good effect.

Referring now to Figure 6, there is shown a flow diagram of the energy provider analysis step 316 of Figure 3. More specifically, in step 602, the system queries the energy data providers. This may include obtaining the cost of the electricity, the source of the electricity (e.g. from fossil fuel, wind or solar generation), as well as environmental impact metrics of the electricity production. In step 604, the process determines the optimal geographical location available for data processing, and returns the optimal geographical location to the user/process. As will be understood, the processing may require substantial processing power, to be carried out in external processing centres, in much the same way that large scale animations are often rendered external to an organization. In this way, the cost of a processing centre does not have to be borne by the user but may be outsourced. It is envisaged that depending on the time of day and the environmental conditions, the cost and impact of the electricity generation may be less in certain geographic areas than in others. For example, if there is a windy day on the west coast of Ireland, it may be advantageous to carry out the processing in a data centre in the west coast of Ireland that uses wind energy rather than using a processing centre in the midlands area of Ireland that is powered using electricity sourced from one or more fossil fuel powered stations. Similarly, it is known that Germany derives much of its electricity from coal powered sources, whereas Greenland sources much of its energy from renewable sources. Accordingly, it may be advantageous, or preferred, to carry out the processing in a data centre in Greenland rather than in Germany.

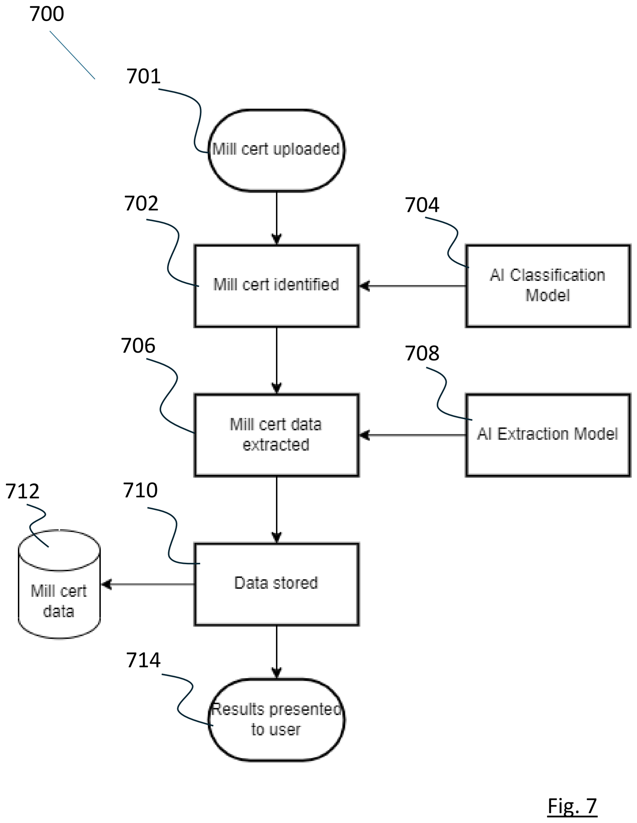

Referring to Figure 7, there is shown a flow diagram of the generation of sustainability metrics for use in the optimization process according to the present invention, indicated generally by the reference numeral 700. In this case, the sustainability metrics are relating to a Mill cert for a steel mill providing the rebar. This may be a factor used when deciding how to use steel from a particular steel mill. In step 701, the mill cert is uploaded. In step 702, the mill cert is identified using an Al classification model 704. In step 706, the mill cert data is extracted using an Al extraction model 708 and in step 710, that data is stored and associated with the mill cert data record in memory 712. In step 714, the results are presented to the user.

Depending on the process used to manufacture the rebar, where the rebar is manufactured, and the desired physical properties of the rebar, the chemical composition of the rebar may differ significantly from one batch to another. More specifically, the carbon content in the rebar may vary significantly. A useful measure of the carbon content in the rebar is the carbon equivalent value (CEQ). The Carbon Equivalent (CEQ) is a measure of the carbon content in an alloy, expressed as a percentage. It is calculated by adding the effects of the other alloying elements to the effect of carbon. Carbon is known to have a significant impact on an alloy's strength, hardness, and other properties. Therefore, Carbon Equivalent is a useful tool when selecting an alloy with the desired strength and performance characteristics. Another metric that may be useful in determining the rebar to use in any given order, is the rolling gain weight of the material. This can be captured and factored into the solution.

Another measure extracted from the steel mill certificates is the steel weight. The end user is then able to compare to the theoretical weights based on standards and minimise any discrepancy as much as possible. This is referred to as the Rolling Gain in Steel which refers to the difference between the actual weight of steel supplied by a mill and the theoretical weight based on standard values, such as those defined by CARES (UK Certification Authority for Reinforcing Steels). The present invention extracts the weight data the same way as it extracts the CEQ value. The utility is different and there is a bigger financial implication associated with the Rolling gains. The end user purchases steel based on the standard's body defined weight, which can result in over- or underpayment depending on the actual weight provided by the mills. The end user aims to minimize this discrepancy as much as possible.

Other features of the present invention will be understood from the following:
As outlined above, the present invention relates to a method of optimizing reinforcement steel (Rebar) cutting process by balancing the least waste with associated carbon emissions, using combinatorial optimization and applied mathematics. This invention may be referred to as Carbon Aware Knapsack Solver (CAKS). The invention solves a knapsack problem (KP) using Heuristics or Linear Programming (LP) as the mathematical basis to optimize the rebar cutting process. The optimization algorithm identifies the optimal combination of supplied orders and requested cuts that reduces scrap and minimizes offcuts.

According to the invention, the end-to-end optimizing procedures for CAKS comprise: (a) developing a control flowgraph representing the execution path for the programme; (b) identifying subgraphs in the programme; (c) performing the steps of: 1. procedure starts with data ingestion/ETL (extract, transform, load) 2. pattern calculation 3. optimization 4. procedure end with final outputs. A flowchart of the end to end process for CAKS, from data ingestion/ETL to pattern calculation and optimization to final outputs, is given in Figure 3.

Rebar optimisation according to the present invention focuses on minimising bar wastage. The goal is to optimise the combinations of cut steel lengths, as requested by customer orders, to reduce waste and overall carbon emissions. For a set of customer orders with varying lengths, the optimisation process iterates globally over the entire order set, finding the optimal cutting patterns that result in minimal bar wastage. There are numerous advantages to such an approach. By having such an invention, there is provided a process in which there is bulk optimisation of order by length and CEQ value, allowing a wide range of order diameters to be processed in one run. Secondly, it is believed that the extraction of CEQ values from bars and optimising based on using more carbon intense bars first provides a more effective solution. Thirdly, CEQ handling (data extraction, optimisation via the CEQ of bar (high CEQ first), minimisation of CEQ wastage levels) provides for a more effective solution. Fourth, by balancing least waste with carbon emissions, we incorporate a sustainability dimension to the algorithm's application.

A linear programming optimization solver is used to find the optimum cut patterns, based on the constraints and the order requirements (such as bar diameter, lengths of the cuts requested and the number of such cuts). These cut patterns are then analyzed to ascertain the frequency with which each pattern can be applied, based on the requested orders. The optimization code finds the combination for the supplied orders and number of cuts requested where the offcut is minimised. If the leftover part of the bar is zero, we select the bar from inventory with the highest Carbon Equivalent Values (CEQ) and calculate the CEQ sum across the order patterns, along with the remaining stock levels. As there is no offcut, carbon costs are minimised as no further carbon costs beyond those in the initial manufacturing of the bar are incurred. If the leftover steel from the bar, after applying the cutting pattern is greater than zero, the inventory steel bar with the lowest available CEQ value is selected to apply the cut patterns. As there is a minimal amount of leftover again, the carbon costs are again minimised. The CAKS optimization is iterated through all requested orders (of varying bar diameters and order cuts), the available inventory database is updated, and the final optimization output is collated and returned for implementation by the user.

As an alternative to the linear programming optimization solver, it is envisaged that a heuristic solution, using either heuristics, meta-heuristics, hyper-heuristics, or a combination of all three would be a suitable alternative solution. The combinatoric approach was limited in capability as the solution is computationally regarded to be NP-Hard, this means that for small sample sizes the solver will work well, however as the sample size increases, or the possible solution domain increases - for example, if we increase the number of possible cuts on a single bar - then the amount of time taken to solve the computation increases exponentially. This approach was adequate to test the solver against the production environment of a primary test client as their order pool was limited, however in testing What-If scenarios, such a solution could encounter unrealistically long run-times. It is envisaged that switching to a heuristic approach will allow the method to tune the size of the solution cloud that it is desired to search, which in turn will result in the possibility of never find the absolute optimal solution, however it will find a sufficiently optimal solution for far less computational power and thus reduce the Scope 3 carbon emissions added to the process. It is believed that this will be more likely to return a better overall result.

It will be further understood that various parts of the present invention are performed in hardware and other parts of the invention may be performed either in hardware and/or in software. It will be understood that the method steps and various components of the present invention will be performed largely in software and therefore the present invention extends also to computer programs, on or in a carrier, comprising program instructions for causing a computer or a processor to carry out steps of the method or provide functional components for carrying out those steps. The computer program may be in source code format, object code format or a format intermediate source code and object code. The computer program may be stored on or in a carrier, in other words a computer program product, including any computer readable medium, including but not limited to a floppy disc, a CD, a DVD, a memory stick, a tape, a RAM, a ROM, a PROM, an EPROM or a hardware circuit. In certain circumstances, a transmissible carrier such as a carrier signal when transmitted either wirelessly and/or through wire and/or cable could carry the computer program in which cases the wire and/or cable constitute the carrier.

It will be further understood that the present invention may be performed on one, two, three or more computing devices with certain parts of the invention being performed by one computing device and other parts of the invention being performed by another computing device. The computing device may include one or more of a supercomputer, a mainframe computer, a minicomputer such as a server, a microcomputer such as a personal computer (PC), a laptop, a tablet, a smartphone, a general purpose computer, a dedicated computer processing machine (such as a workstation), or the like. The devices may be connected together over a communications network. The present invention and claims are intended to also cover those instances where the system and/or method is operated across two or more devices or pieces of apparatus located in one or more locations in one or more jurisdictions.

In this specification the terms "comprise, comprises, comprised and comprising" and the terms "include, included, includes and including" are all deemed interchangeable and should be afforded the widest possible interpretation.

The invention is not limited to the embodiments hereinbefore described but may be varied in both construction and detail within the scope of the appended claims.

## Claims

1. A computer-implemented method of optimizing a reinforcement steel (rebar) cutting process, the method comprising the steps of:
creating and maintaining an inventory of rebar stock, the inventory comprising, for each piece of rebar, the diameter of the rebar, the length of the rebar, and the carbon equivalent value (CEQ) of the rebar;
receiving a plurality of disparate orders for cut lengths of rebar;
collating the plurality of orders into a unitary order specification;
performing an optimization process on the unitary order specification, the optimization process comprising the steps of:
determining the plurality of possible cutting patterns applicable to satisfy the order;
determining the optimal cutting pattern from the plurality of possible cutting patterns applicable to satisfy the order, the optimal cutting pattern factoring in both (i) the minimum amount of waste; and (ii) the minimum amount of carbon (CEQ) in the waste; and thereafter
providing the optimal cutting pattern to a rebar cutting process for execution.

2. A computer-implemented method as claimed in claim 1, in which the step of performing an optimization process on the unitary order specification, comprises the alternative steps of:
determining a solution space containing the plurality of possible cutting pattern solutions applicable to satisfy the order;
providing a set of heuristic rules which prioritise pathways which satisfy the logistical and operational business requirements appropriate to a given client;
determining the optimal cutting pattern from the solution space of possible cutting patterns applicable to satisfy the order, the optimal cutting pattern factoring in both (i) the minimum amount of waste; and (ii) the minimum amount of carbon (CEQ) in the waste; and (iii) the business preference for off-cut lengths and frequency.

3. A computer-implemented method as claimed in claim 1 or 2 in which for those rebar with no waste generated by the cutting process after applying the cutting pattern, the rebar with the highest CEQ value is selected from inventory.

4. A computer-implemented method as claimed in any preceding claim in which for those rebar with waste generated by the cutting process after applying the cutting pattern, the rebar with the lowest available CEQ value is selected from inventory.

5. A computer-implemented method as claimed in any preceding claim in which the method comprises the initial step of receiving user-specified constraints for the optimization process.

6. A computer-implemented method as claimed in claim 5 in which the user-specified constraints include one or more of: (i) a user specified rebar length;(ii) a set of order requirements including the cut length and number required; (iii) a maximum number of cuts in a pattern; and (iv) a maximum length of the bar to be cut to minimize offcut.

7. A computer-implemented method as claimed in any preceding claim in which the method comprises the initial step of receiving user-defined parameters.

8. A computer-implemented method as claimed in any preceding claim in which the step of performing an optimization process on the unitary order specification comprises performing combinatorial optimization on the unitary order specification.

9. A computer-implemented method as claimed in any preceding claim in which the step of performing an optimization process on the unitary order specification comprises characterizing the optimization process as a knapsack problem.

10. A computer-implemented method as claimed in any preceding claim in which the step of performing an optimization process on the unitary order specification comprises implementing a linear programming optimization solver.

11. A computer-implemented method as claimed in any preceding claim in which the step of performing an optimization process on the unitary order specification comprises implementing a heuristics approach to the optimization process.

12. A computer-implemented method as claimed in any preceding claim in which the method includes the steps of (i) obtaining global energy production information; and (ii) sending the unitary order specification to a data processing centre based on one or more of: (a) the least amount of energy used; (b) the lowest cost of energy used; and (c) the lowest carbon required for processing.

13. A computer-implemented method as claimed in any preceding claim in which the method includes the additional steps of: determining a carbon production value for the rebar depending on its point of origin; and factoring in the carbon production value when determining the CEQ of the rebar.

14. A computer-implemented method as claimed in any preceding claim in which the method includes the additional steps of: determining a carbon transport value for the rebar depending on its point of original; and factoring in the carbon transport value when determining the CEQ of the rebar.

15. A computer program product having program instructions, that when loaded on a computer, cause the computer to perform the method steps of any one of claims 1 to 14.
